(19) Europäisches Patentamt / European Patent Office / Office européen des brevets

(11) **EP 1 933 494 B1**

(12) **EUROPEAN PATENT SPECIFICATION**

(45) Date of publication and mention
of the grant of the patent:
**07.04.2010 Bulletin 2010/14**

(51) Int Cl.:
*H04L 7/00* (2006.01)     *H04J 3/07* (2006.01)

(21) Application number: **06025570.0**

(22) Date of filing: **11.12.2006**

(54) **Data processing unit and method for synchronising communication of a plurality of data processing units**

Datenverarbeitungseinheit und Verfahren zur Synchronisierung der Kommunikation zwischen Datenverarbeitungseinheiten

Unité de traitement de données et méthode de synchronisation de communication entre des unités de traitement de données

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**18.06.2008 Bulletin 2008/25**

(73) Proprietor: **WAGO Kontakttechnik GmbH (nach Schweizer Recht)
& Co. KG
32423 Minden (DE)**

(72) Inventor: **Di Matteo, Serge
c/o Accent S.p.A.
20059 Vimercate, MI (IT)**

(74) Representative: **Gerstein, Hans Joachim
Gramm, Lins & Partner GbR
Freundallee 13a
30173 Hannover (DE)**

(56) References cited:
**EP-A1- 1 209 814     WO-A-99/46861
GB-A- 2 072 463     US-A- 4 210 777**

**Description**

The invention relates to a method for synchronising communication of a plurality of data processing units over a data bus, each of the data processing units comprising local clock oscillators providing clock signals for synchronising digital data communication, wherein a first data processing unit is provided as a master data processing unit synchronising the timing of data communication and controlling data communication of controlled slave data processing units.

The invention further relates to data processing units comprising an interface provided for data communication of a data bus, a local clock oscillator providing a local clock oscillator signal and a processor unit provided for data processing and control of communication of data bit streams comprising a sequence of bits over the data bus.

Data communication of a data bus is wide spread used in the computer technique. Especially for control systems comprising a master controller and a plurality of input/output-units, connected to the master controller by an internal system bus, synchronising of the data communication is required. The master controller additionally provides a data communication system with other devices connected to the master controller by a field bus. Often, the internal system bus is designed in ring bus topology so, that a bit data stream is sequentially forwarded from the master controller through a sequence of input/output-units.

In order to synchronise the data communication, the master controller sends data frames comprising a defined number of symbols, each symbol having a fixed number of bits periodically so, that the time length of a data frame is constant. In case that the data processing units are provided with local clock oscillators, no common time base is available. It is therefore a problem to achieve a constant time length of the data frames received or sent by a data processing unit. Thus, a data frame sent by a slave data processing unit might be shorter or longer as the standard data frame of a time length defined by the local clock oscillator of the master data processing unit. Further, the sampling of a data frame via a slave data processing unit might cause errors, when the clock cycle of the slave data processing unit differs from the standard clock cycle of the master data processing unit setting the time length of the sampled data frame.

In order to compensate time differences between the master clock cycles and the slave clock cycles it is known to add or to remove symbols or to add or remove bit of symbols. The problem is that when adding or removing symbols, an error in the data message occurs. Further, an exact number of bits per symbol is often required for certain data communication. It is further known to dynamically adjust the local oscillator of stave data processing units to the master clock cycle defined by the master local clock oscillator of the master data processing unit. This requires exact time signals to be communicated via the data bus. Many data communication systems do not allow transmission and use of such critical timing signals.

GB 2 072 463 A1 discloses a system for network communication over a two-wire bus. A source of synchronizing pulses is provided for marking TDM-cycles of fixed duration. Each TDM-cycle is divided into a number of time slots and each slot has a specific width of clock periods. Thus, the TDM-cycle period is fixed. For synchronizing the communication, synchronizing pulses are provided having a predefined width. Further, the maximum width of data pulse is predefined.

US 4,210,777 A discloses a telex switching system, in which a variable length stop bit is dynamically generated for each character transmitted such that the length of the stop bit is changed as a time required by the calling terminal to transmit the character to its terminator unit decreases over that time required by the called terminator unit to transmit the character to the called terminal.

By adjusting the stop bit length, a faster transmission rate is accomplished

Object of the present invention is to provide an improved method for synchronising communication of a plurality of data processing units, especially for use in asynchronous communication systems.

The object is achieved by the aforementioned method in, that at least one bit length of a sequence of bits to be communicated over the data bus is dynamically adapted to adjust a clock cycle difference between a master clock cycle based upon the local clock oscillator signal of the master data processing unit and a slave clock cycle based upon the local clock oscillator signal of a slave data processing unit.

According to the present invention, the time length of a data frame, i.e. a sequence of data bits, e.g. a sequence of symbols comprising a defined number of bits, is varied simply by shorten or lengthen the time length of at least one bit compared to a standard bit length defined by a clock cycle depending on the local clock oscillator signal.

In contrast to a synchronising communication by adding or removing bits of a bit data stream, the information content remains unchanged in the method according to the present invention. Further, no control of the local clock oscillators is required.

Preferably, at least one slow bit is provided into the data bit stream, said slow bit having a longer time duration than the other bits of the bit sequence in order to adjust a faster slave clock cycle to a slower master clock cycle, which is slower than the slave clock cycle.

Thus, in case that the local clock oscillator of the slave runs faster than the local clock oscillator of the master, the timing of the slave is delayed by extending the cycle time of at least one specific selected bit so, that the time length of the bit sequence including the slow bit corresponds to the time length of a corresponding sequence of the master data processing unit.

Preferably, the slave clock cycles are set faster than the master clock cycle. This makes it easier to synchronise the communication, since only slow bits are to be inserted by prolongating the time duration of selected bits in the slave data processing units. A slave clock cycle being faster than the master clock cycle guarantees that the minimal clock cycle of the slave is always grater or equal than the maximal clock cycle of the master.

In a preferred embodiment, one / eight of the bit length of a standard bit length of a bit sequence is added to at least one selected bit in order to adapt the bit length of the sequence of bits. The standard bit length is defined by the slave clock cycle based upon the slave local clock oscillator system signal.

In a preferred embodiment, the bit length of a sequence of bits is adapted by amending the bit length of a bit only after transition in the bit sequence. A transition in the sequence can be a rising or falling edge in the bit signal. Thus, a constant bit value bit sequence acts as a single bit. Only one duration of one oversampling clock cycle, i.e. extension or shortening of a bit length can be added to this kind of bit sequence in order to avoid unwanted communication errors.

The dynamical adaption of the bit length can be controlled in dependence of a data overflow in the process of data communication. For example, a FIFO-register (shift register) in a data processing unit provided for receiving or transmitting of a bit data stream over the data bus controls the dynamical adaption. In case of an estimated or occurring data overflow or underflow in the FIFO-register the bit length of at least one bit of the bit sequence is extended or shortened to match the timing of the slave data processing unit and the master data processing unit.

Further, the master clock cycle of a first master data processing unit can be variably adapted by adjusting the time between a sequence of time flags provided in a bit data stream through adapting the bit length of the bit data stream in order to synchronise the first master clock cycle with a second master clock cycle of a second master communicating with the first master data processing. Thus, the method according to the present invention can also be used for synchronising communication between two systems each controlled by a master data processing unit.

In a preferred embodiment, the digital bit data stream is coded by use of an 8 b/10b-code. In the 8b/10b-code a symbol comprising 8 bits is transmitted by use of symbols containing 10 bits. In the 8 b / 10 b scheme, at least three transitions per symbol exist. In case that a bit having an adapted bit length is provided only after transition in the symbol, at least three adaptions may take place.

A further object of the present invention is to provide an improved data processing unit comprising an interface provided for data communication over data bus, a local clock oscillator providing a local clock oscillator signal and a processor unit provided for data processing and control of communication of data bit streams comprising a sequence of bits over the data bus.

The object is achieved by the data processing unit in that the processor unit is provided for dynamically adapting the bit length of a sequence of bits to be communicated over the data bus to adjust a clock cycle difference between a master clock cycle based upon the local clock oscillator signal of the master data processing unit and a slave clock cycle based upon the local clock oscillator signal of a slave data processing unit.

The data processing unit is provided for performing the aforementioned method.

The invention is further explained in detail by way of example with the enclosed drawings, in which

Figure 1 - shows a block diagram of a system comprising master and slave data processing units communicating with each other over a data bus;

Figure 2 - shows a time diagram of bit borders and bit transitions of a symbol comprising 10 bits;

Figure 3 - shows two following bits, wherein the time length of the first bit is extended;

Figure 4 - shows a diagram of sampling points and a shift of sampling points when the master and slave clock cycles differ from each other.

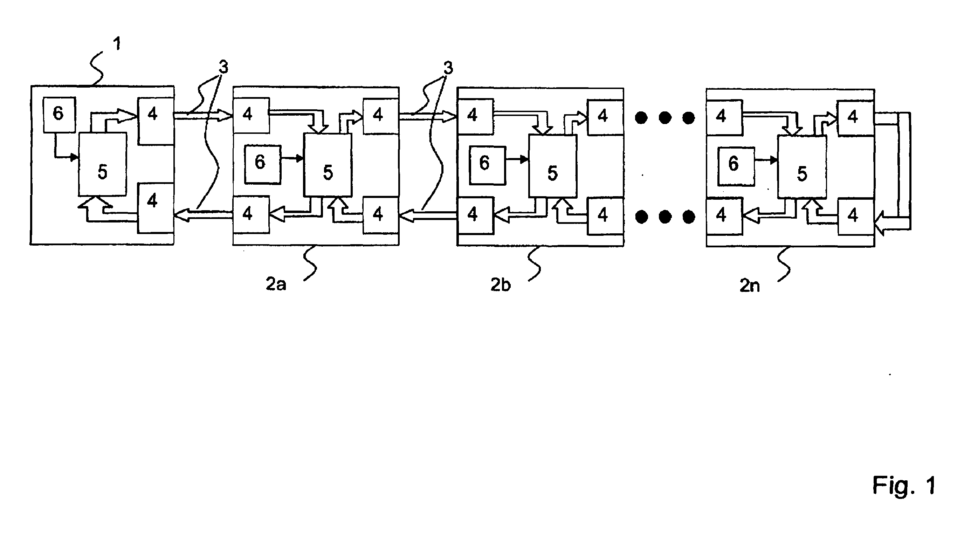

Figure 1 shows a block diagram of an asynchronous communication system comprising a master data processing unit 1 and a plurality of slave data processing units 2a, 2b, 2n. The master and slave data processing units 1, 2 are communicating with each other via a data bus 3. The data bus 3 runs as an internal system bus.

The slave data processing units 2 can be input/output-modules of a field bus control system, wherein the master data processing device 1 is a field bus modul coupling the system to a field bus. The system supports data transfers from the master data processing unit 1 to the slave data processing units 2 and vice versa. The data transfer channel from the master data processing unit 1 to the slave data processing unit 2 is named downstream channel. The data transfer channel from the slave data processing unit 2 to the master data processing unit 1 is named upstream channel. Both channels use the same communication structure for transmission and for reception of data. Depending on the system application, data transfers may take place at the same time on both channels, thus allowing full duplex data transfer.

Each of the master and slave data processing units 1, 2 comprises an interface 4 for controlling data communication over the data bus 3. Further, the data processing units 1, 2 each comprises a processor 5 for data processing and control of communication of data bit streams. The data processor 5 or the interface 4 comprises a FIFO-register for buffering a bit data stream, which is forwarded through the data processing units 1, 2.

The processors 5 of the data processing units 1, 2 are controlled by local clock oscillators 6, wherein each data processing unit 1, 2 comprises its own local clock oscillator 6. The local clock oscillators 6 provides a clock signal in order to set a clock cycle to control the bit length or symbol length respectively.

The master data processing unit 1 and the slave data processing unit 2 provides two transmitter paths and two receiver paths. Using these paths, the master and the slave devices are connected in series. For the downstream data channel, a receiver path of an I/O module always connects to the transmitter path of its physical predecessor. The first transmitter in the system is the master data processing unit 1. For the upstream data channel, the transmitter path of a slave data processing unit 2 (I/O-module) always connects to the receiver path of its physical predecessor. The last receiver on the upstream data path is the master data processing unit.

Due to this connection scheme, the system behaves like a closed loop that has a specific amount of data flowing in it. Any amount of data that enters into any of the data processing units 1, 2 in a reception path must exit the data processing unit 2 on a transmission path. This applies to the downstream channel and to the upstream channel as well. This behaviour is independent of the baudrate and independent of the master data processing unit 1 or the clock frequency of the slave data processing unit 2.

The master data processing unit 1 always determines the baudrate of the system. The slave data processing unit 2 can only follow the master baudrate. They never can change the baudrate of a system that has been configured once after the initial power-on-cycle has been finished. The final mean baudrate that is used in the system is determined after baudrate selection and baudrate tuning have been performed.

In order to tune the baudrate for synchronising the communication between the data processing units 1, 2, the bit length of a sequence of bits to be communicated over the data bus 3 is dynamically adapted by control of the processor 5 of a data processing unit 1, 2 so, that the time length of a data frame comprising a least one symbol including a plurality of bits is matched for each of the data processing units 1, 2 even if the local clock oscillator signals of the local clock oscillators 6 of the plurality of data processing units 1, 2 differ from each other.

Data transmission takes place in symbols. One symbol transmitted via the data bus 3 corresponds to one byte of data. However, a 8 b /10 b-coding scheme is used for data communication, so that one byte of data that is fed into a transmitter of a data processing unit 1, 2 is translated into the corresponding 8 b / 10 b-symbol, thereby increasing the number of bits from 8 bits to 10 bits. The receiver of a data processing unit 1, 2 processes the inverse and converts 8 b / 10 b-symbols to bytes. Thereby, bit count is reduced again from 10 bits to 8 bits.

Each of the transmitters and receivers operate on an oversampling clock controlled by the local clock oscillator 6. The oversampling clock is a fixed multiple of the baudrate of the system. Due to oversampling, each symbol bit is divided into small portions, having the duration of the reciprocal of the oversampling clock. The small portion of a symbol bit is called a TIC.

The relation between the oversampling clock and the symbol duration is described by the oversampling factor. The oversampling factor might be always set to 8.

Since one symbol contains 10 bits and each of these bits is divided into 8 TIC's, the nominal duration of one symbol is 80 TIC's.

Each of the master and slave data processing units 1, 2 run an oversampling clock that is independent from the clocks of all other members of the system. The clock signals are provided by the local clock oscillators 6. However, it is assumed that the oversampling frequency of the data processing units 1, 2 are in a closed relationship to each other. Thus, there is a well defined range of oversampling frequencies for the data processing units 1, 2 of one system. Due to the difference in oversampling clock frequencies, one data processing unit 1, 2 may receive data slower than its predecessor transmits the data. Depending on the amount of data, the slower one will receive an internal overrun condition in its buffers after some time, when too much data are available inside the data processing unit 1, 2. If the receiving data processing unit 1, 2 operates on a faster clock cycle than its predecessor, it will receive an internal underrun condition after some time, when no data for transmission are available anymore.

Since there is no physical line available that allows transmitting a synchronisation clock signal between all data processing units 1, 2 of one system, the method according to the present invention for synchronising communication is used.

In the method, the local master data processing unit 1 should be operated on an oversampling frequency that is in a well-known range below the oversampling frequencies of the slave data processing units. Each of the slave data processing unit 2 has an oversampling frequency that is in a well-known range above the master oversampling frequency. Since all the slave data processing units 2 run faster than the master data processing unit 1 does, the slave data processing units 2 are provided to reduce their baudrate to keep track with the baudrate that is used by the master data processing unit 1.

For baudrate reduction, the slave data processing unit 2 provides slow bits as required when transmitting symbols. That is, the bit length of selected bits of a symbol is increased, e.g. by use of a reduced number of TIC's. One TIC is the duration of one oversampling clock cycle, so that one bit is transmitted by use of a plurality of clock cycles.

Even the master data processing unit 1 might use slow bits to reduce its own baudrate to a value that is known to be lower than the baudrate of the slowest slave data processing unit 2. The number of slow bits having an increased bit length is decided by an internal control loop of the slave data processing units 2. In the master data processing unit 1, slow bits should be provided in fixed programmed intervals. A slow bit is a period extension of a symbol bit by one TIC or a plurality (two, three, four, ...) of TICs. The period extension should always be one TIC or a plurality of TIC's. In case that the duration of a bit comprises the sequence of 8 TIC's, a symbol bit that is extended by a slow bit has a period of 9 TIC's. The logic level of the symbol bit does not change during the additional TIC.

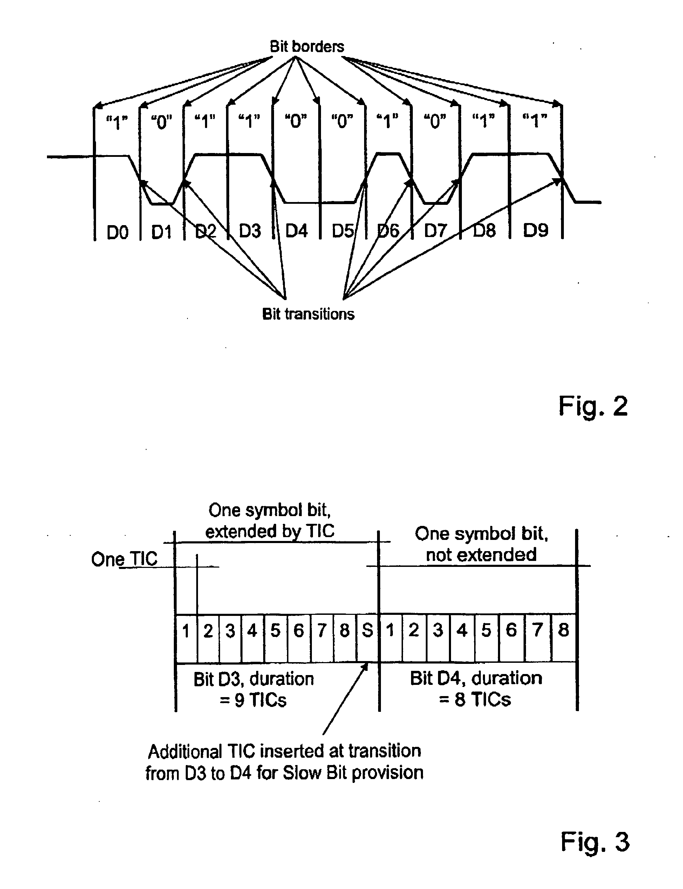

Figure 2 shows a diagram of a symbol comprising 10 bits D0, D1, ..., D9 and the respective logical values "1" or "0". In case that the logical value of a subsequent bit changes, a bit transition will be recognised in form of a falling or raising edge.

In case that the duration of a bit must be adapted, the data processing unit 1, 2 follows some rules, which will be described in the following with respect to figure 2.

The transmitter of a data processing unit 1, 2 always performs dynamical adapting of a bit length, e.g. slow bit provision, in the data stream if required. The transmitter tries to use a slow bit whenever it is requested to do this and whenever it is allowed to provide a slow bit.

As a rule, the bit transitions are candidate for slow bit provision. In case that the transition in form of a raising or falling edge is recognised, the transmitter is generally allowed to shorten ("fast bit") or lengthen ("slow bit") the bit length.

Figure 3 shows a diagram of bits D3 and D4 wherein the bit length of bit D3 is adapted by inserting an additional TIC, i.e. one additional clock cycle of the local clock oscillator 6. This extension can take place since there is a transition from bit D3 to D4. In the example shown in figure 3, the oversampling factor of 8 is used. This divides the symbol bit D3 into 9 slots, whereas symbol bit D4 is a period that can be divided in 8 slots.

The master data processing unit 1 provides slow bits according to the contents of a slow bit register. The number of slow bits used for a specific configuration of the system is already known at system start and written to the slow bit register only once. Thus, if the slow bit register is set to 100, only one slow bit is inserted after 100 normal data bits which have been forwarded to the data bus 3. The slow bit provision will be delayed if there is no transition at the 100th bit position. Provision of the slow bit will take place on the falling or raising edge that must be transmitted to the system.

The downstream transmission frequency can be generated in the master data processing unit 1 in two different ways. The phase-locked-loop PLL of the local clock oscillator 6 of the master data processing unit 1 is configured to exact the frequency that is required. No slow bits are sent from the master data processing unit 1 to the downstream channel in this case. On the other hand, the phase-locked-loop PLL of the master data processing unit 1 can be configured to a frequency close to the local clock oscillator signal fs of the local clock oscillators 6 of the slave data processing units 2. The master data processing unit 1 includes slow bits to reduce the effective data transmission frequency.

In the second solution, the bit sampling point in the slave device will shift towards the bit border, if the bits were generated by a master frequency $f_M$ that is far away from the slave frequency $f_s$. In contrast, if the slave frequency $f_s$ and the master frequency $f_M$ are close to each other, the sampling point will remain more reliable in the middle of the bit.

Since slow bits are only inserted at the border of bits, they do not have impact on the sampling point. This is especially true for the comma characters that have a number of 5 bits set to the same value.

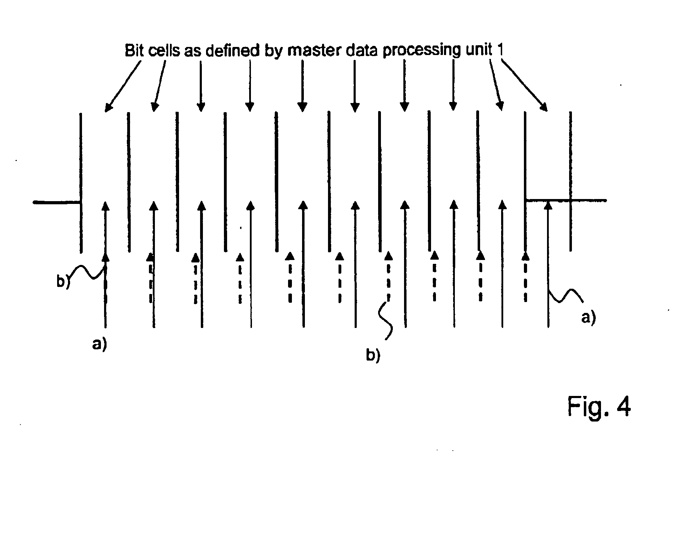

Figure 4 shows a diagram of the sampling point shift. The distance between the vertical lines are the bit cells as defined by the master data processing unit 1. The arrows a) are showing the sampling event in the middle of the bit cell in case that the slave frequency $f_s$ is close to the master frequency $f_M$.

The arrows b) are showing the sampling shifts to the bit border due to a deviation between the slave frequency $f_s$ and the master frequency $f_M$.

The use of slow bits (or fast bits) having a variable bit length by the master data processing unit 1 is therefore recommended in order to improve the robustness of the data transmission.

The rule for adapting the bit length of a sequence of bits by the slave data processing units 2 are explained in the following.

The slave data processing units 2 inserts TIC's for lengthening bits according to the number of bits that are available in the transmission bit FIFO-register and according to the programmed transmitter FIFO-threshold. A slow bit request is signalled to the processor 5 or to the interface 4 of the slave data processing unit 2 whenever the number of bits available in the transmission FIFO-register is lower than the programmed FIFO-threshold. If this is the case, the transmitter starts to adapt the bit length of a sequence of bits as much as possible. When the FIFO-register is filled up to the programmed level, the slow bit request is negated to void transmission FIFO-register overflow.

The comparison of the number of bits in the FIFO-register to the threshold introduces a simple control loop. This control loop outputs only two states. One state is to request slow bits to be provided, the other state is to transmit only normal bits.

However, the processor 5 or transmitter in the interface 4 of a slave data processing unit 2 takes care of the rule that slow bits are allowed only when the transmitted logic level changes. A logic level change might be a positive or a negative transition. If the transmitter outputs a steady state value, the slow bit request is temporarily registered in a counter. The transmission of one or more slow bits is delayed in this case.

The process of dynamically adapting the bit length of the sequence of bits is based on three rules:

  a) the maximum slow bit provision is one TIC per bit;
  b) the additional TIC can only be inserted after a falling or rising bit edge; ,
  c) the symbol transmission in the system is based on 8b/10b encoding / decoding.

Further, the ranges of the oversampling clock frequencies are defined as follows:

  a)

$$f_S > f_M$$

  b)

$$f_{Smax} \le f_{max}$$

  c)

$$(f_{Smax} - f_{Mmin}) \le \Delta_{max}$$

The rule that the slave oversampling clock frequency $f_S$ is always greater than the master oversampling clock frequency $f_M$ can be secured by design of the local clock oscillator 6.

Further, the rule that the maximum slave oversampling clock frequency $f_{Smax}$ is always below or equal to the maximum oversampling clock frequency $f_{max}$ of all data processing units 1, 2 of the system can also be fulfilled by the design if components in configuration are chosen in an appropriate way.

The rule that the maximum difference of the maximum slave oversampling clock frequency $f_{Smax}$ and the minimal master oversampling clock frequency $f_{Mmin}$ is always below or equal the threshold $\Delta_{max}$ requires the aforementioned rules.

From the rule that the maximum slow bit provision is one TIC per bit, a restriction adaption is provided. For x8 oversampling, the duration of one bit within a symbol can be 8 TIC's or 9 TIC's. No other values are possible.

From the rule that the additional TIC can only be inserted after a falling or rising bit edge, only one TIC can be added to this kind of bit sequence. Thus, the maximum duration of such a sequence is (8 x N) or ((8 x N) + 1) TIC's, where N is a number of consecutive bits having identical value.

The rule of the 8b / 10b-coding scheme allows to consider at least three transitions per symbol. For this scheme, no symbols with less than three transitions exist. This number does not include a possible transition at the border of symbols.

The previous consideration will now be applied to a bit stream that is transmitted within the system.

The bit stream consists of "N" bits. Each bit has duration of $T_{BIT}$. The duration of each bit is also equal to the duration of 8 oversampling clocks or equal to 8 TIC's. The duration of one TIC is $1/f_M$ since we assumed the master transmits the bit stream. The time required by the master to transmit the entire bit steam is

$$T_M = \frac{8 * N}{f_M}$$

The equation shown above does not include any slow bit. For each of the bits, exactly 8 TIC's are assumed.

The amount of data that is transferred by the master to its output must be same amount of data that enters the first slave device at its receiver input. Now, a number of "N" bits of data generated by the master with its transmission clock $f_M$ must also be generated by the slave at its output, but with the slave frequency $f_S$. Since the slave operates at a higher frequency, it must add slow bits into its output data stream. If no slow bits were added, the FIFO of the slave device would enter an underrun condition. Each slow bit that is added to the outgoing data stream has duration of $1/f_S$. For a longer data stream, "K" slow bits must be added to the data stream to avoid FIFO underrun. This relationship can be written down in a formula that describes the time for transmission of the bit stream. The time must be the same for master and slave. The equation is

$$\frac{8 * N}{f_M} = \frac{8 * N}{f_S} + \frac{K}{f_S}$$

In this equation, the left side is the time required by the master to transmit a bit stream with the length of "N" bits. The right side includes the time required by the slave device for data bit transmission plus a number of slow bits. Solving this equation for "K", the number of slow bits is achieved that must be transmitted for a data stream with a length of "N" bits.

$$K = 8 * N * \left( \frac{f_S}{f_M} - 1 \right)$$

Changing the equation points out the number of slow bits that are required for transmission of one standard data bit (not stretched).

$$\frac{K}{N} = 8 * \left( \frac{f_S}{f_M} - 1 \right)$$

The equation shown above points out that the number of slow bits that must be transmitted for one data bit depends on the ratio of the clock frequencies that are used in the master and slave devices. The ratio $f_S/f_M$ is > 1 if the three fundamental rules have been observed. Thus, K will always be a positive number.

However, there are more limitations that must be taken into account. As an example, one might use a slave clock frequency of 512 MHz and a master clock frequency of 1 MHz. Using these values, the ratio KIN will be 511. This implies the transmission of 511 slow bits for each standard bit. This case is not allowed since the system cannot transmit more than one slow bit per standard bit. With a maximum of one slow bit per standard bit, the above equation is rewritten to reflect this case. Substituting K/N by 1, the result is

$$1 \geq 8 * \left( \frac{f_S}{f_M} - 1 \right)$$

Modifying the equation shown above points out the real limits on the frequency ratio.

$$\frac{9}{8} * f_M \geq f_S$$

The slave clock frequency cannot be higher than 1.25 the master clock frequency if one slow bit can be inserted for one standard bit.

Things change when the other rules are taken into account. In the 8b/10b scheme three transitions per symbol exist. Each symbol contains 10 bits. A slow bit can be introduced only after a bit transition in the symbol.

Therefore, the equation $1 \geq 8 * (f_S / f_M - 1)$ is rewritten to include this rule.

$$\frac{3}{10} \geq 8 * \left( \frac{f_S}{f_M} - 1 \right)$$

This relationship is worse than the previous one since now only three of ten symbols can be extended to be a slow bit. Rewriting of the equation points out the maximum acceptable frequency ratio between the master and the slave clock frequency for the 8b/10 scheme.

$$\frac{83}{80} \geq \frac{f_S}{f_M}$$

This equation is now ready to be applied to one of the fundamental equations, stating that the slave frequency must always be higher than the master frequency. Using these values, the analytical result for $\Delta$ max is obtained.

$$\frac{83}{80} * f_{MMin} \geq f_{SMax}$$

The equation shown above states that the minimum master frequency multiplied by 103,75% must be larger than the maximum slave frequency. It should be notet, that $1.0375 * f_{Mmin}$ is only a theoretical value that will never appear within the system. $\Delta_{max}$ for the 8b/10b scheme is 3.75%.

**Claims**

1. Method for synchronising communication of a plurality of data processing units (1, 2) over data bus (3), each of the data processing units (1, 2) comprising local clock oscillators (6) providing local clock oscillator signals for synchronising digital data communication, wherein a first data processing unit is provided as a master data processing unit (1), synchronising the timing for data communication and controlling the data communication of controlled slave data processing units (2), **characterised by** dynamically adapting the bit length of a sequence of bits to be communicated over the data bus (3) to adjust a clock cycle difference between a master clock cycle based upon the local clock oscillator signal of the master data processing unit (1) and a slave clock cycle based upon the local clock oscillator signal of a slave data processing unit (2).

2. Method according to claim 1, **characterised by** providing at least one slow bit having a longer time duration than the other bits of a bit sequence in order to adjust a faster slave clock cycle to a slower master clock cycle, which is slower than the slave clock cycle.

3. Method according to claim 2, **characterised by** setting the slave clock cycles faster than the master clock cycle.

4. Method according to claim 2 or 3, **characterised by** adding 1 / 8 of the bit length of a standard bit length of a bit sequence, the standard bit length being defined by the slave clock cycle based upon the slave local clock oscillator signal.

5. Method according to one of preceding claims, **characterised by** adapting the bit length of a sequence of bits by amending the bit length of a bit only after transition in the bit sequence.

6. Method according to claim 5, **characterised in that** a transition is assumed when recognising a rising edge in the bit signal.

7. Method according to claim 5, **characterised in that** a transition is assumed when recognising a falling edge in the bit signal.

8. Method according to one of the preceding claims, **characterised by** controlling dynamically adaption of the bit length in dependence on a data overflow in the process of data communication.

9. Method according to one of the preceding claims, **characterised by** variably adapting a first master clock cycle of a first master data processing unit (1) by adjusting the time between a sequence of time flags provided in a digital bit data stream through adapting the bit length of bits in the bit data stream in order to synchronise the first master clock cycle with a second master clock cycle of a second master data processing unit communicating with the first master data processing unit (1).

10. Method according to one of the preceding claims, **characterised by** use of a 8 b / 10 b-code, wherein 8 bit symbols of the data bit stream are a coded by symbols having a length of 10 bit.

11. Data processing unit (2) comprising an interface (4) provided for data communication over a data bus (3), a local clock oscillator (6) for providing a local clock oscillator signal and a processing unit (5) provided for data processing and control of communication of data bit streams comprising a sequence of bits over the data bus (3), **characterised in, that** the processing unit (2) is provided for dynamically adapting the bit length of a sequence of bits to be communicated over the data bus (3) to adjust a clock cycle difference between a master clock cycle based upon the local clock oscillator signal of a master data processing unit (1) and the clock cycle of the data processing unit (2) based upon the local clock oscillator signal of the data processing unit (2).

12. Data processing unit (2) according to claim 11, **characterised in that** the data processing unit (2) is provided for performing the method according to any of claims 1 to 10.

**Patentansprüche**

1. Verfahren zur synchronisierten Kommunikation einer Mehrzahl von Datenverarbeitungseinheiten (1, 2) über einen Datenbus (3), wobei jeder der Datenverarbeitungseinheiten (1, 2) lokale Taktgeber (6) hat, die lokale Taktgebersignale zur Synchronisierung einer digitalen Datenkommunikation bereitstellt, wobei eine erste Datenverarbeitungseinheit als eine Master-Datenverarbeitungseinheit (1) vorgesehen ist, die den Zeitablauf der Datenkommunikation synchronisiert und die Datenkommunikation von überwachten Slave-Datenverarbeitungseinheiten (2) steuert, **gekennzeichnet durch** dynamisches Adaptieren der Bitlänge einer Sequenz von Bits, die über den Datenbus (3) übertragen werden sollen, um eine Taktzyklusdifferenz zwischen einem Master-Taktzyklus basierend auf den lokalen Taktgebersignal der Master-Datenverarbeitungseinheit (1) und einem Slave-Taktzyklus basierend auf dem lokalen Taktgebersignal einer Slave-Datenverarbeitungseinheit (2) anzupassen.

2. Verfahren nach Anspruch 1, **gekennzeichnet durch** Bereitstellen mindestens eines langsamen Bits, das eine längere Zeitdauer als die anderen Bits einer Bitfolge hat, um einen schnelleren Slave-Taktzyklus an einen langsameren Master-Taktzyklus anzupassen, der langsamer als der Slave-Taktzyklus ist.

3. Verfahren nach Anspruch 2, **gekennzeichnet durch** Einstellen der Slave-Taktzyklen schneller als die Master-Taktzyklen.

4. Verfahren nach Anspruch 2 oder 3, **gekennzeichnet durch** Addieren von 1/8 der Bitlänge einer Standardbitlänge einer Bitfolge, wobei die Standardbitlänge **durch** den Slave-Taktzyklus basierend auf dem lokalen Taktgebersignal des Slaves definiert ist.

5. Verfahren nach einem der vorhergehenden Ansprüche, **gekennzeichnet durch** Adaptieren der Bitlänge einer Sequenz von Bits **durch** Ändern der Bitlänge eines Bits nur nach Transition in der Bitsequenz.

6. Verfahren nach Anspruch 5, **dadurch gekennzeichnet, dass** eine Transition bei Erkennen einer steigenden Flanke in dem Bitsignal angenommen wird.

7. Verfahren nach Anspruch 5, **dadurch gekennzeichnet, dass** eine Transition bei Erkennen einer fallenden Flanke in dem Bitsignal angenommen wird.

8. Verfahren nach einem der vorhergehenden Ansprüche, **gekennzeichnet durch** Steuern der dynamischen Anpassung der Bitlänge in Abhängigkeit von einem Datenüberlauf in dem Prozess der Datenkommunikation.

9. Verfahren nach einem der vorhergehenden Ansprüche, **gekennzeichnet durch** variables Anpassen eines ersten Master-Taktzykluses einer ersten Master-Datenverarbeitungseinheit (1) **durch** Anpassen der Zeit zwischen einer Sequenz von Zeitmarkierungen, die in einem digitalen Bitdatenstrom vorgesehen sind, **durch** Anpassen der Bitlänge von Bits in dem Bitdatenstrom, um den ersten Master-Taktzyklus mit einem zweiten Master-Taktzyklus einer zweiten Master-Datenverarbeitungseinheit zu synchronisieren, die mit der ersten Master-Datenverarbeitungseinheit (1) kommuniziert.

10. Verfahren nach einem der vorhergehenden Ansprüche, **gekennzeichnet durch** Verwenden eines 8 b / 10 b-Codes, wobei 8 Bitsymbole des Datenbitstroms **durch** Symbole mit einer Länge von 10 Bit codiert werden.

11. Datenverarbeitungseinheit (2) mit einer Schnittstelle (4), die zur Datenkommunikation über einen Datenbus (3) vorgesehen ist, einen lokalen Taktgeber (6) zur Bereitstellung eines lokalen Taktgebersignals und einer Verarbeitungseinheit (5), die zur Datenverarbeitung und Steuerung einer Kommunikation von Datenbitströmen enthaltend eine Sequenz von Bits über den Datenbus (3) vorgesehen ist, **dadurch gekennzeichnet, dass** die Datenverarbeitungseinheit (2) zur dynamischen Anpassung der Bitlänge einer Folge von Bits, die über den Datenbus (3) kommuniziert werden, vorgesehen ist, um eine Taktzyklusdifferenz zwischen einem Master-Taktzyklus basierend auf dem lokalen Taktgebersignal an einer Master-Datenverarbeitungseinheit (1) und dem Taktzyklus der Datenverarbeitungseinheit (2) basierend auf dem lokalen Taktgebersignal der Datenverarbeitungseinheit (2) anzupassen.

12. Datenverarbeitungseinheit (2) nach Anspruch 11, **dadurch gekennzeichnet, dass** die Datenverarbeitungseinheit (2) zur Ausführung des Verfahrens nach einem der Ansprüche 1 bis 10 vorgesehen ist.

**Revendications**

1. Procédé de synchronisation de communication d'une pluralité d'unités de traitement de données (1, 2) par l'intermédiaire d'un bus de données (3), chacune des unités de traitement de données (1, 2) comportant des oscillateurs d'horloge locaux (6) délivrant des signaux d'oscillateur d'horloge local pour synchroniser une communication de données numériques, dans lequel une première unité de traitement de données est prévue en tant qu'unité de traitement de données maître (1), synchronisant le temps pour une communication de données et contrôlant la communication de données des unités de traitement de données esclaves contrôlées (2), **caractérisé par** une adaptation dynamique de la longueur de bit d'une séquence de bits à communiquer par l'intermédiaire du bus de données (3) afin d'ajuster une différence de cycle d'horloge entre un cycle d'horloge maître en fonction du signal d'oscillateur d'horloge local de l'unité de traitement de données maître (1) et un cycle d'horloge esclave en fonction du signal d'oscillateur d'horloge local d'une unité de traitement de données esclave (2).

2. Procédé selon la revendication 1, **caractérisé par** la délivrance d'au moins un bit lent présentant une durée plus longue que les autres bits d'une séquence de bits afin d'ajuster un cycle d'horloge esclave plus rapide à un cycle d'horloge maître plus lent, qui est plus lent que le cycle d'horloge esclave.

3. Procédé selon la revendication 2, **caractérisé par** la détermination de cycles d'horloge esclave plus rapides que le cycle d'horloge maître.

4. Procédé selon la revendication 2 ou 3, **caractérisé par** l'ajout d'1/8 de la longueur de bit d'une longueur de bit standard d'une séquence de bits, la longueur de bit standard étant définie par le cycle d'horloge esclave en fonction du signal d'oscillateur d'horloge local.

5. Procédé selon l'une des revendications précédentes, **caractérisé par** l'adaptation de la longueur de bit d'une séquence de bits en modifiant la longueur de bit d'un bit uniquement après transition dans la séquence de bits.

6. Procédé selon la revendication 5, **caractérisé en ce qu'**une transition est supposée lors de la reconnaissance d'un front avant dans le signal de bit.

7. Procédé selon la revendication 5, **caractérisé en ce qu'**une transition est supposée lors de la reconnaissance d'un front descendant dans le signal de bit.

8. Procédé selon l'une quelconque des revendications précédentes, **caractérisé par** le contrôle d'une adaptation dynamique de la longueur de bit dépendant d'un débordement de données lors du processus de communication de données.

9. Procédé selon l'une des revendications précédentes, **caractérisé par** l'adaptation variable d'un premier cycle d'horloge maître d'une première unité de traitement de données maître (1) en ajustant le temps entre une séquence de drapeaux de temps prévus dans un flux de données binaires en adaptant la longueur de bit des bits dans le flux de données binaires afin de synchroniser le premier cycle d'horloge maître avec un second cycle d'horloge maître d'une seconde unité de traitement de données maître communiquant avec la première unité de traitement de données maître (1).

10. Procédé selon l'une des revendications précédentes, **caractérisé par** l'utilisation d'un code 8b/10b, dans lequel des symboles à 8 bits d'un flux de bits de données sont codés par des symboles présentant une longueur de 10 bits.

11. Unité de traitement de données (2) comportant une interface (4) prévue pour une communication de données par l'intermédiaire d'un bus de données (3), un oscillateur d'horloge local (6) pour délivrer un signal d'oscillateur d'horloge local et une unité de traitement (5) prévue pour un traitement de données et un contrôle de communication de flux de bits de données comportant une séquence de bits par l'intermédiaire du bus de données (3), **caractérisée en ce que** l'unité de traitement de données (2) est prévue pour adapter de façon dynamique la longueur de bit d'une séquence de bits à communiquer par l'intermédiaire du bus de données (3) afin d'ajuster une différence de cycle d'horloge entre un cycle d'horloge maître en fonction du signal d'oscillateur d'horloge local d'une unité de traitement de données maître (1) et le cycle d'horloge de l'unité de traitement de données (2) en fonction du signal d'oscillateur d'horloge local de l'unité de traitement de données (2).

12. Unité de traitement de données (2) selon la revendication 11, **caractérisée en ce que** l'unité de traitement de données (2) est prévue pour effectuer le procédé selon l'une quelconque des revendications 1 à 10.

Fig. 1

Bit borders

"1" "0" "1" "1" "0" "0" "1" "0" "1" "1"

D0 D1 D2 D3 D4 D5 D6 D7 D8 D9

Bit transitions

**Fig. 2**

One symbol bit,
extended by TIC

One TIC

One symbol bit,
not extended

| 1 | 2 | 3 | 4 | 5 | 6 | 7 | 8 | S | 1 | 2 | 3 | 4 | 5 | 6 | 7 | 8 |
|---|---|---|---|---|---|---|---|---|---|---|---|---|---|---|---|---|

Bit D3, duration
= 9 TICs

Bit D4, duration
= 8 TICs

Additional TIC inserted at transition
from D3 to D4 for Slow Bit provision

**Fig. 3**

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2072463 A1

- US 4210777 A